# NEUE EUROPÄISCHE PATENTSCHRIFT

(11) **EP 1 284 320 B2**
(45) Veröffentlichungstag und Bekanntmachung des Hinweises auf die Entscheidung über den Einspruch: **16.03.2011**
(45) Hinweis auf die Patenterteilung: 02.11.2005
(21) Anmeldenummer: 02017572.5
(22) Anmeldetag: 07.08.2002
(51) Int. Cl.: D21H 21/48, D21H 27/40, B31F 1/20

(54) **Verfahren zur Herstellung von mit Transpondern versehener Wellpappe und mit Transpondern versehene Wellpappe**
Process for making corrugated board containing a transponder, and corrugated board containing a transponder
Procédé de fabrication de carton ondulé contenant un transpondeur, et carton ondulé contenant un transpondeur

(30) Priorität: 16.08.2001 DE 10140286
(43) Veröffentlichungstag der Anmeldung: 19.02.2003
(73) Patentinhaber: Panther Packaging GmbH & Co.KG, 25436 Tornesch (DE)
(72) Erfinder: Hibinger, Frank Dr., 25436 Gross Nordende (DE)
(74) Vertreter: Schaeffer, Michael

(56) Entgegenhaltungen:
- EP-A- 0 615 285
- WO-A-01/03058
- WO-A1-99/31626
- DE-A- 19 601 358
- DE-A- 19 950 532
- DE-C- 19 520 131
- US-A- 5 786 626
- US-A- 6 121 880
- US-B1- 6 249 226

## Beschreibung

Die Erfindung betrifft ein Verfahren zur Herstellung von mit Transpondern versehener Wellpappeverpackungen.

Grundsätzlich ist die Verwendung von Transpondern zur Lokalisierung von Gegenständen, insbesondere Autos und Fahrrädern, im Rahmen einer Diebstahlssicherung bekannt.

Die G 94 16 253 offenbart eine Überwachungseinrichtung bei der an der zu sichernden Ware ein codierter Transporter angebracht ist, der mit einer entsprechend codierten Abfrageeinheit zusammenarbeitet. Dabei ist der Transponder über eine Manipulationssicherung mit der Ware verbunden.

Die EP 0 984 380 betrifft die Identifizierung bzw. Diebstahlsicherung von beweglichen Gegenständen insbesondere Fahrrädern, wobei der Transponder Identifikationsdaten speichert zu denen bei Auslieferung an einen Kunden weitere diesem zugeordnete Identifikationsdaten hinzukommen, so daß im Fall eines Verlustes oder Diebstahls bei späterem Wiederauffinden die gewünschte Identifikation vorgenommen werden kann.

Aufgabe der vorliegenden Erfindung ist es, den gemäß dem Stand der Technik bekannten Einsatzbereich von Transpondem zu erweiteren.

Diese Aufgabe wird durch ein Verfahren zur Herstellung von mit Transpondern versehenen Wellpappeverpackung (1), indem
- eine Seite (3a) einer Deckenbahn (3) auf eine Seite (2a) einer Wellenbahn (2) kaschiert wird und
- zwischen die eine Deckenbahn (3) und die Wellenbahn (2) wenigstens ein Transponder (5) eingebracht wird dadurch gekennzeichnet, dass
- eine Lage des wenigstens einen Transponder in einer Verpackung bestimmt wird und
- ein Schnittmuster der Verpackung bestimmt wird und
- eine Lage des weinigstens einen Transponder (5) auf dem Schnittmuster gemäß der Lage in der Verpackung bestimmt wird und
- eine Lage des wenigstens einen Transponder (5) auf der einen Deckenbahn (3) bestimmt wird.

Die Wellpappe weist in einer einfachen Ausführungsform eine Wellenbahn mit wellenförmigem Querschnitt auf. Auf eine Seite der Wellenbahn ist eine Seite einer im wesentlichen ebenen Deckenbahn kaschiert. Kaschieren bezeichnet hier den Vorgang des Aufbringens der Deckenbahn auf die Wellenbahn. Aufbringen ist vorzugsweise aufkleben. Dabei wird die eine Seite der Wellenbahn vorzugsweise mit Klebemittel versehen. Das Klebemittel wird günstigenfalls nur im Bereich der Kronen der Wellen auf die eine Seite der Wellenbahn aufgetragen. Danach wird die eine Seite der einen Deckenbahn auf die eine mit Klebemittel versehene Seite der Wellenbahn aufgebracht. Deckenbahnen und Wellenbahn weisen vorzugsweise Papier auf oder bestehen aus Papier. Die durch Aufkaschieren einer Deckenbahn auf eine Wellenbahn entstehende Wellpappe wird auch als offene Wellpappe oder einseitige Wellpappe bezeichnet.

Erfindungsgemäß wird zwischen die eine Deckenbahn und die Wellenbahn wenigstens ein Transponder eingebracht. Grundsätzlich wird die Wellpappe in großen Abmessungen hergestellt, d.h., daß die Deckenbahn und die Wellenbahn von bis zu mehreren Metern breiten auf Abrollständern gelagerten Papierrollen abgerollt werden. Die Wellpappe kann nach dem erfindungsgemäßen Kaschieren und Einbringen des wenigstens einen Transponders eine sehr große Anzahl Transponder aufweisen.

Vorzugsweise werden codierte Transponder verwendet Die codierten Transponder arbeiten mit einer Abfrageeinheit zusammen. Von der Abfrageeinheit wird ein codiertes Abfragesignal ausgesendet. Das codierte Abfragesignal wird von dem wenigstens einen Transponder empfangen und entschlüsselt und durch Aussendung eines codierten Antwortsignals beantwortet Die Aussendung des codierten Antwortsignals erfolgt vorzugsweise vollautomatisch. Der Transponder kann ohne eigene Stromversorgung auskommen. Das Antwortsignal wird bei der Abfrageeinheit gleichfalls automatisch entschlüsselt.

In einer bevorzugten Ausfūhrungsform der Erfindung wird eine Seite einer anderen Deckenbahn auf eine andere Seite der Wellenbahn kaschiert. Das Kaschieren wird vorzugsweise wie oben beschrieben durchgeführt. Die Aufkaschierte andere Deckenbahn gibt der Wellpappe zusätzliche Stabilität.

In einer weiteren bevorzugten Ausführungsform des erfindungsgemäßen Verfahrens wird der wenigstens eine Transponder auf die eine Seite der einen Deckenbahn aufgebracht und die eine Seite der Deckenbahn wird danach auf die eine Seite der Wellenbahn kaschiert.

Günstigenfalls wird der wenigstens eine Transponder dabei deckenbahnseitig mit Klebemittel versehen und auf die eine Seite der einen Deckenbahn aufgeklebt Als Klebemittel kann Stärkeleim verwendet werden. Es sind grundsätzlich auch andere Arten der Aufbringung des Transponders auf die eine Seite der einen Deckenbahn denkbar. Zur Optimierung des Klebemittelverbrauchs wird zum einen der Transponder deckenbahnseitig mit Klebmittel versehen und zum anderen die eine Seite der Wellenbahn mit Klebemittel versehen. Auf die eine Deckenbahn wird vorzugsweise kein Klebemittel direkt aufgetragen.

Selbstverständlich kann der wenigstens eine Transponder auch zwischen die Wellenbahn und die andere Deckenbahn eingebracht werden. Dazu wird zunächst zur Ausbildung einer einseitigen Wellpappe eine Deckenbahn auf eine Wellenbahn kaschiert und der wenigstens eine Transponder zwischen die Welle der offenen Wellpappe und die andere Deckenbahn eingebracht. Es ist auch denkbar Transponder sowohl zwischen Wellenbahn und der einen Deckenbahn als auch zwischen Wellenbahn und der anderen Deckenbahn einzubringen.

Bei dem erfindungsgemäßen Verfahrens wird eine Lage des wenigstens einen Transponders in einer Verpackung bestimmt, ein Schnittmuster der Verpackung bestimmt, eine Lage des wenigstens einen Transponders auf dem Schnittmusters gemäß der Lage in der Verpackung bestimmt und eine Lage des wenigstens einen Transponders auf der einen Seite der einen Deckenbahn bestimmt. Die Lage des wenigstens einen Transponders kann auch auf der anderen Deckenbahn bestimmt werden. Vorzugsweise wird unter Verpackung die zu fertigende Verpackung verstanden.

Durch das erfindungsgemäße Verfahren können Transponder an vorgegebenen Stellen einer Verpackung angeordnet werden. Zunächst wird die Lage des wenigstens einen Transponders in der zu fertigenden Verpackung bestimmt Daraufhin wird das Schnittmuster der zu fertigenden Verpackung bestimmt. Die Lage des wenigstens einen Transponders auf dem Schnittmuster der Verpackung wird vorzugsweise so bestimmt, daß der wenigstens eine Transponder an einem möglichst ebenen Bereich der Verpackung positioniert wird. Die Lage des wenigstens einen Transponders auf dem Schnittmuster der Verpackung sollte demnach insbesondere nicht auf Falzlinien oder Schnittlinien des Schnittmusters bestimmt werden. Die Schnittmuster der Verpackung werden auf der Wellpappe vorzugsweise derart angeordnet, daß ein geringer Verschnitt entsteht Nach Bestimmung der Lage des Schnittmusters einer Verpackung auf der Wellpappe kann die Lage des wenigstens einen Transponders bestimmt werden. Die Lage des wenigstens einen Transponders wird vorzugsweise auf der einen Seite der einen Deckenbahn bestimmt.

Beide Deckenbahnen als auch Wellenbahnen können Pappier aufweisen oder aus Pappier bestehen.

Grundsätzlich ist es auch denkbar, daß eine weitere Wellenbahn auf eine andere Seite der anderen Deckenbahn oder eine andere Seite der einen Deckenbahn aufkaschiert ist. Grundsätzlich ist die Lagefolge von Wellenbahn und Deckenbahn beliebig oft wiederholbar. Jede der Außenseiten der Wellpappe kann entweder eine Deckenbahn oder eine Wellenbahn sein.

Vorzugsweise ist zwischen dem wenigstens einen Transponder und der einen Deckenbahn Klebstoff angeordnet

In dieser Ausführungsform der erfindungsgemäßen Wellpappe ist der Transponder deckenbahnseitig mit Klebemittel, insbesondere Stärkeleim versehen.

In einer besonders bevorzugten Ausführungsform der Erfindung ist der wenigstens eine Transponder codiert oder weist einen Temperaturfühler auf. Die Wellpappe kann dabei insbesondere als Verpackung ausgeformt sein in die Ware zum Verkauf oder zum Versand eingebracht ist.

Das codierte Abfragesignal der Abfrageeinheit ist durch den Transponder empfangbar und entschlüsselbar und durch vorzugsweise vollautomatische Aussendung eines codierten Antwortsignals beantwortbar. Das codierte Antwortsignal kann weitere Informationen insbesondere hinsichtlich der in der Verpackung befindlichen Ware tragen. Insbesondere kann der Transponder einen Temperaturfühler aufweisen. Das Antwortsignal kann somit Informationen hinsichtlich der Temperatur in Bereich des Transponders und damit oder Ware tragen. Der Transponder kann einen Speicherchip, in den der Temperaturverlauf eines zurückliegenden Zeitraumes einlesbar ist, aufweisen. Derartige Transponder eignen sich insbesondere zur Temperaturüberwachung leicht verderblicher Lebensmittel.

Es ist auch denkbar, daß der wenigstens eine Transponder Antwortsignale mit Informationen über den Preis der in der Verpackung befindlichen Ware aussendet Hier sind vielfältige Einsatzmöglichkeiten denkbar, wenn die Wellpappe als Verpackung ausgeformt ist und bestimmte Ware in die Verpackung eingebracht ist. Beispielsweise kann der Kassenbereich von Warenhäusern oder Supermärkten mit entsprechenden Abfrageeinheiten versehen sein. Somit wäre eine vollautomatische Aufsummierung der Preise der eingekauften Waren beim Unterfahren der Abfrageeinheit denkbar.

Der wenigstens eine Transponder ist dabei vorzugsweise stoffschlüssig in die Verpackung eingebracht. Der wenigstens eine Transponder ist somit von außerhalb der Wellpappe nicht sichtbar. Eine Entfernung des wenigstens einen Transponders kann kaum ohne Beschädigung der Wellpappe erfolgen.

Die Erfindung soll in einer Ausführungsform beispielhaft erläutert werden, dabei zeigen:

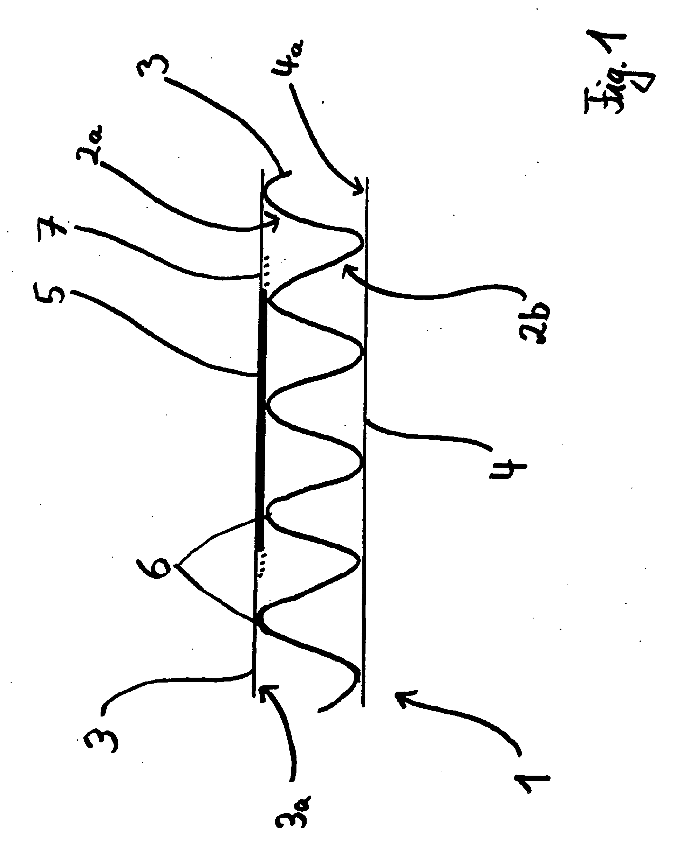

- Figur 1: Querschnitt einer erfindungsgemäßen Wellpappe

In der Figur 1 ist ein Querschnitt eines Stückes Wellpappe 1 dargestellt. Die Wellpappe 1 besteht aus einer Wellenbahn 2 einer Deckenbahn 3 und einer anderen Deckenbahn 4 und wenigstens einem Transponder 5. Die eine Deckenbahn 3 ist mit einer Seite 3a auf eine Seite 2a der Wellenbahn 2 aufkaschiert. Zwischen der einen Seite 2a der Wellenbahn 2 und der einen Seite 3a der einen Deckenbahn 2 ist der wenigstens eine Transponder 5 eingeklebt. Der wenigstens eine Transponder 5 ist flach und hat eine obere Oberfläche von mehreren Quadratzentimetern. Die eine Seite 2a der Wellenbahn 2 weist Kronen 6 auf. Der wenigstens eine Transponder 5 ist so dimensioniert, daß er auf mehreren Kronen 6 der einen Seite 2a der Wellenbahn 2 aufgeklebt ist.

Eine Seite 4a der anderen Deckenbahn 4 ist auf eine andere Seite 2b der Wellenbahn 2 aufkaschiert. Zwischen der einen Seite 4a der anderen Deckenbahn 4 und dem Kronenbereich der anderen Seite 2b der Wellenbahn 2 ist Stärkeleim aufgetragen

Der wenigstens eine Transponder 5 weist eine ihn umlaufende Antenne 7 auf. Der wenigstens eine Transponder 5 ist formschlüssig zwischen die eine Deckenbahn 3 und die Wellenbahn 2 geklebt Die Lage des wenigstens einen Transponders 5 ist von außerhalb der Wellpappe 1 nicht erkennbar. Der wenigstens eine Transponder 1 ist ohne Beschädigung der Wellpappe 1 nicht entfernbar.

## Patentansprüche

1. Verfahren zur Herstellung von mit Transpondem versehenen Wellpappeverpackung (1), indem
- eine Seite (3a) einer Deckenbahn (3) auf eine Seite (2a) einer Wellenbahn (2) kaschiert wird und
- zwischen die eine Deckenbahn (3) und die Wellenbahn (2) wenigstens ein Transponder (5) eingebracht wird **dadurch gekennzeichnet, dass**
- eine Lage des wenigstens einen Transponder in einer Verpackung bestimmt wird und
- ein Schnittmuster der Verpackung bestimmt wird und
- eine Lage des wenigstens einen Transponder (5) auf dem Schnittmuster gemäß der Lage in der Verpackung bestimmt wird und
- eine Lage des wenigstens einen Transponder (5) auf der einen Deckenbahn (3) bestimmt wird.

2. Verfahren nach Anspruch 1, **dadurch gekennzeichnet, daß** eine Seite (4a) einer anderen Deckenbahn (4) auf eine andere Seite (2b) der Wellenbahn (2) kaschiert wird.

3. Verfahren nach den Ansprüchen 1 oder 2, **dadurch gekennzeichnet, daß** der wenigstens eine Transponder (5) auf die eine Seite (3a) der einen Deckenbahn (3) aufgebracht wird und die eine Seite (3a) der einen Deckenbahn (3) danach auf die eine Seite (2a) der Wellenbahn (2) kaschiert wird.

4. Verfahren nach den Ansprüchen 1 bis 3, **dadurch gekennzeichnet, daß** der wenigstens eine Transponder (5) deckenbahnseitig mit Klebemittel versehen wird und auf die eine Seite (3a) der einen Deckenbahn (3) aufgeklebt wird.

5. Verpackung aus Wellpappe (1) hergestellt nach einem Vorfahren gemäß einem der Patentansprüche 1 bis 4.

## Claims

1. A process for producing corrugated board packaging (1) provided with transponders, by
- one side (3a) of a linerboard (3) being laminated onto one side (2a) of a corrugating medium (2) and
- at least one transponder (5) being introduced between the said linerboard (3) and the corrugating medium (2), **characterised in that**
- a location, in packaging, of the at least one transponder is determined and
- a packaging pattern is determined and
- a location of the at least one transponder (5) on the pattern is determined according to the location in the packaging and
- a location of the at least one transponder (5) on the said linerboard (3) is determined.

2. A process according to claim 1, **characterised in that** one side (4a) of another linerboard (4) is laminated onto another side (2b) of the corrugating medium (2).

3. A process according to claims 1 or 2, **characterised in that** the at least one transponder (5) is applied to the said side (3a) of the said linerboard (3) and the said side (3a) of the said linerboard (3) is subsequently laminated onto the said side (2a) of the corrugating medium (2).

4. A process according to claims 1 to 3, **characterised in that** the at least one transponder (5) is provided linerboard-side with adhesive and is stuck onto the said side (3a) of the said linerboard (3).

5. Packaging made of corrugated board (1), produced according to a method according to any one of claims 1 to 4.

## Revendications

1. Procédé pour la fabrication de carton ondulé (1) pourvu de transpondeurs, dans lequel
- une face (3a) d'une feuille de couverture (3) est contrecollée sur une face (2a) d'une feuille ondulée (2) et
- entre l'une des feuilles de couverture (3) et la feuille ondulée (2) est inséré au moins un transpondeur (5).
- une position du transpondeur, au nombre d'au moins un, dans un emballage est définie et
- un patron de l'emballage est défini,
- une position du transpondeur (5), au nombre d'au moins un, sur le patron est définie en fonction de la position dans l'emballage, et
- une position du transpondeur (5), au nombre d'au moins un, sur l'une des feuilles de couverture (3) est définie.

2. Procédé selon la revendication 1, **caractérisé en ce qu'**une face (4a) d'une autre feuille de couverture (4) est contrecollée sur une autre face (2b) de la feuille ondulée (2).

3. Procédé selon les revendications 1 ou 2, **caractérisé en ce que** le transpondeur (5) au nombre d'au moins un est mis en place sur l'une des faces (3a) de l'une des feuilles de couverture (3), et l'une des faces (3a) de l'une des feuilles de couverture (3) est ensuite contrecollée sur l'une des faces (2a) de la feuille ondulée (2).

4. Procédé selon les revendications 1 à 3, **caractérisé en ce que** le transpondeur (5), au nombre d'au moins un, est pourvu d'adhésif côté feuille de couverture et est collé sur l'une des faces (3a) de l'une des feuilles de couverture (3).

5. Emballage en carton ondulé (1) fabriqué selon l'une des revendications 1 à 4.
